# EUROPÄISCHE PATENTSCHRIFT

(11) **EP 2 885 587 B1**
(45) Veröffentlichungstag und Bekanntmachung des Hinweises auf die Patenterteilung: **25.04.2018**
(21) Anmeldenummer: 13701915.4
(22) Anmeldetag: 19.01.2013
(51) Int. Cl.: F24J 2/52, F24J 2/54, H01L 31/042, E04B 1/343, E04B 1/36, H02S 20/30, H02S 20/10

(54) **TRAGKONSTRUKTION FÜR SOLARMODULE**
SUPPORT STRUCTURE FOR SOLAR MODULES
CONSTRUCTION PORTEUSE POUR MODULES SOLAIRE

(30) Priorität: 17.08.2012 DE 202012103108 U
(43) Veröffentlichungstag der Anmeldung: 24.06.2015
(73) Patentinhaber: Habdank PV-Montagesysteme GmbH & Co. KG, 73037 Göppingen (DE)
(72) Erfinder: HABDANK, Martin, 73092 Heiningen (DE)
(74) Vertreter: Ruckh, Rainer Gerhard
(86) Internationale Anmeldenummer: PCT/EP2013/000161
(87) Internationale Veröffentlichungsnummer: WO 2014/026722

(56) Entgegenhaltungen:
- WO-A1-2011/118754
- DE-U1-202009 001 983

## Beschreibung

Die Erfindung betrifft eine Tragkonstruktion gemäß dem Oberbegriff des Anspruchs 1. WO 2011/118754 A1 beschreibt eine Tragkonstruktion gemäß dem Oberbegriff des Anspruchs 1. Derartige Tragkonstruktionen mit einer Mehrzahl von Solarmodulen, insbesondere Photovoltaikmodulen, bilden Solaranlagen, die insbesondere als Freilandanlagen ausgeführt sein können, bei welchen Pfosten in den Erdboden eingebracht, insbesondere eingerammt werden. Auf diesen Pfosten, welche typischerweise in einer Reihe oder mehreren Reihen angeordnet werden, werden Traganordnungen über Verbindungselemente befestigt. Darauf sind dann die Solarmodule montiert.

Je nach Applikation müssen die Träger der Traganordnung in unterschiedlichen Neigungen montiert werden. Hierzu ist es erforderlich, die Tragkonstruktion mit einer entsprechenden Neigungsverstellung zu versehen.

Eine weitere Tragkonstruktion ist aus der DE 10 2011 017 467 B3 bekannt. Diese Tragkonstruktion für Solarmodule umfasst eine Anordnung von auf Pfosten gelagerten Trägern. Jeder Träger ist mit mindestens einem festen, durch ein axial verschiebbares und mit einer Klemmhülse arretierbares Stangensegment dadurch verbunden, dass das Stangensegment an einem längsseitigen Ende ein Führungselement aufweist, dass in ein in Längsrichtung des Trägers verlaufendes Langloch greift. Durch die Verschiebung des Stangensegments ist eine kombinierte Höhen- und Neigungsverstellung des Trägers durchführbar.

Nachteilig hierbei ist zum einen, dass eine Neigungsverstellung eines Trägers nur zusammen mit einer Höhenverstellung durchführbar ist. Ein weiterer Nachteil besteht darin, dass die das Verstellelement zur Verschiebung des Stangensegments der vollen Belastung des Trägers ausgesetzt ist. Dies erschwert einerseits die durchzuführende Neigungsverstellung. Zudem können sich durch die hohe Belastung der Klemmhülse Stabilitätsprobleme ergeben.

Die DE 10 2008 018 422 A1 betrifft ein Montagesystem für Ständer für Photovoltaik-Freiflächenanlagen, welches je Ständer mit einer Stütze und einem Schrägbalken sowie einer Strebe zum Abstreben des Schrägbalkens gegen die Stütze ausgerüstet ist. Die Stütze, der Schrägbalken und die Strebe können zu einem fest einstellbaren Ständer in Form eines Dreieckfachwerks zusammengesetzt werden. Hierzu ist zwischen Schrägbalken und Strebe eine zweite und zwischen Strebe und Stütze eine dritte Gelenkverbindung vorgesehen. Die erste Gelenkverbindung umfasst einen ersten Gelenkansatz, die zweite Gelenkverbindung umfasst einen zweiten Gelenkansatz. Die beiden Gelenkansätze sind am Schrägbalken längsgeführt angeordnet. Die beiden Gelenkansätze sind am Schrägbalken unverdrehbar längsgeführt und dort an Sollpositionen fest angesetzt. Die Stütze ist mit dem ersten Gelenkansatz und die Strebe mit dem zweiten Gelenkansatz drehgelenkig verbindbar.

Mit dieser Anordnung ist zwar eine Neigungsverstellung für auf den Ständern gelagerte Solarmodule möglich, jedoch weist diese einen konstruktiv aufwändigen Aufbau auf, da pro Ständer drei verschiedene Gelenkverbindungen erforderlich sind, wobei zudem für zwei Gelenkverbindungen längsverschiebbare Gelenkansätze vorgesehen werden müssen, wodurch sich eine unerwünscht hohe Anzahl beweglicher Teile ergibt.

Ein weiterer Nachteil dieser Anordnung besteht darin, dass die verschiebbar angeordneten Gelenkverbindungen direkt der vollen Belastung der Schrägbalken und der darauf gelagerten Solarmodule ausgesetzt sind, wodurch die Einstellvorgänge erheblich erschwert sind.

Ein weiterer wesentlicher Nachteil besteht darin, dass die Positionen der längsverschiebbar angeordneten Gelenkverbindungen applikationsspezifisch für die jeweilige Ständergeometrie durch einen Tragwerksplaner berechnet und vorgegeben werden müssen, was einen erheblichen Konstruktion- und Anpassungsaufwand für jede applikationsspezifische Installation bedeutet.

Der Erfindung liegt die Aufgabe zugrunde, eine Tragkonstruktion der eingangs genannten Art bereitzustellen, bei welcher mit geringem konstruktivem Aufwand eine sichere und zuverlässige Neigungsverstellung von Solarmodulen ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Tragkonstruktion für Solarmodule umfasst eine Anordnung von auf einem Untergrund gelagerten Pfosten. An jedem Pfosten ist eine Trägereinheit schwenkbar gelagert, wobei die Trägereinheit zwei einen Querträger tragende Streben aufweist, deren dem Querträger abgewandte Enden in einer Schwenklagerung gelagert sind. Der Querträger ist mittels Führungsmitteln verschiebbar am Pfosten gelagert. An dem Querträger sind Aufnahmemittel zur Lagerung von Solarmodulen vorgesehen. Durch Einstellung und Fixierung einer Schwenkposition der Trägereinheit ist die Neigung der Solarmodule vorgegeben. Die Führungsmittel können derart ausgebildet sein, dass mit diesem kontinuierlich variierende Neigungswinkel der Solarmodule vorgegeben werden können. Dann sind als Führungsmittel in dem Querträger ein entlang einer gekrümmten Bahn verlaufendes Langloch und am Pfosten ein im Langloch geführter Zapfen vorgesehen. Die Schwenklagerung ist so ausgebildet, dass dort die Trägereinheit um einen festen Drehpunkt drehbar ist. Alternativ ist die Schwenklagerung so ausgebildet, dass die dort zusammenlaufenden Enden der Streben bei einem Schwenken der Trägereinheit längs einer Bahn bewegt werden. Dann verläuft das Langloch des Querträgers längs einer Geraden. Die Führungsmittel können auch derart ausgebildet sein, dass mit diesen ein oder mehrere diskrete Neigungswinkel der Solarmodule vorgegeben werden können. Insbesondere kann als Führungsmittel in dem Querträger eine Folge von diskreten Löchern vorgegeben sein. Am Pfosten ist ein Zapfen vorgesehen, welcher zur Vorgabe eines Neigungswinkels wahlweise in eines der Löcher eingeführt wird. Alternativ wird als Führungsmittel applikationsspezifisch ein einzelnes Loch in den Querträger eingearbeitet, dessen Position im Querträger den Neigungswinkel definiert. Am Pfosten ist ein Zapfen vorgesehen, welcher in das Loch eingeführt wird.

Ein wesentlicher Vorteil der Erfindung besteht darin, dass die Streben mit dem Querträger eine universelle, für unterschiedliche Applikationen geeignete Baueinheit bilden, die durch ein Schwenken an der Schwenklagerung in ihrer Neigung schnell und exakt eingestellt werden kann. Dadurch ergibt sich eine einfache und zuverlässige Neigungsverstellmöglichkeit von auf diesen Baugruppen gelagerten Solarmodulen. Da für die neigungsverstellbare Baueinheit mit den Streben und dem Querträger stets dieselben Bauteile in unveränderter Form und Anordnung verwendet werden, ergibt sich für die erfindungsgemäße Tragkonstruktion ein erheblicher Rationalisierungseffekt bei deren Fertigung.

Ein weiterer wesentlicher Vorteil der erfindungsgemäßen Tragkonstruktion besteht darin, dass bei der Trägereinheit die Streben die Hauptlast der von oben wirkenden Gewichtskräfte aufnehmen, wogegen der Querträger hiervon weitgehend entlastet ist. Wesentlich bei der erfindungsgemäßen Tragkonstruktion ist dabei, dass bei einer Neigungsverstellung im Wesentlichen nur der Querträger mittels der Führungsmittel eine Verschiebungsbewegung durchführen muss, und zwar gegenüber dem Pfosten. Da der Querträger und die Führungsmittel im Gegensatz zu den Streben kaum Gewichtskräfte aufnehmen müssen, ist eine einfache Neigungsverstellung gewährleistet.

Ein weiterer wesentlicher Vorteil der erfindungsgemäßen Tragkonstruktion besteht darin, dass zur Durchführung der Neigungsverstellung als verstellbare Elemente nur die Schwenklagerung und die Führungsmittel zur Verstellung des Querträgers gegenüber dem Pfosten vorgesehen werden müssen. Die Trägereinheit, bestehend aus Streben und Pfosten braucht nicht selbst mit verstellbaren Elementen ausgerüstet sein. Vielmehr wird die gesamte Trägereinheit als unveränderliche Einheit in ihrer Gesamtheit an der Schwenklagerung für eine Neigungsverstellung geschwenkt. Besonders vorteilhaft sind daher auch die Streben fest, das heißt starr an dem Querträger angebunden, so dass die so gebildete Trägereinheit eine stabile Bauform ausbildet. Prinzipiell könnten die Streben auch gelenkig an dem Querträger angebunden sein.

Gemäß einer vorteilhaften Ausgestaltung der Erfindung ist ein längsseitiges Ende einer Stütze mit einem längsseitigen Ende eine Querträgers verbunden. Die Stützen laufen in einem stumpfen Winkel auf die Schwenklagerung zu.

Die so ausgebildete Trägereinheit weist eine hohe Stabilität auf, wobei insbesondere die Stützen noch große Kräfte aufnehmen können.

Gemäß einer ersten Variante der Erfindung sind die Führungsmittel derart ausgebildet, dass mit diesem kontinuierlich variierende Neigungswinkel der Solarmodule vorgegeben werden können.

Dabei sind als Führungsmittel in dem Querträger ein Langloch und am Pfosten ein im Langloch geführter Zapfen vorgesehen.

Die so ausgebildeten Führungsmittel weisen einen konstruktiv einfachen Aufbau auf und ermöglichen ein kontinuierliches Verschieben des Querträgers relativ zum Pfosten, so dass dadurch auch eine kontinuierliche Neigungsverstellung der Trägereinheit ermöglicht wird.

Zur gegenseitigen Anpassung der Schwenklagerung und der Führungsmittel ist gemäß einer ersten Ausführungsform die Schwenklagerung so ausgebildet, dass dort die Trägereinheit um einen festen Drehpunkt drehbar ist. Entsprechend verläuft das Langloch des Querträgers entlang einer gekrümmten Bahn.

Diese Variante zeichnet sich dadurch aus, dass die Schwenklagerung einen einfachen Aufbau aufweisen kann, da in diesem Fall an der Schwenklagerung die Trägereinheit um einen festen Drehpunkt gedreht wird.

Alternativ zu einer Langlochführung können als Führungsmittel auch Klemmschlitten und dergleichen vorgesehen sein, mittels derer ebenfalls eine kontinuierliche Neigungsverstellung ermöglicht wird.

Gemäß einer zweiten Variante der Erfindung sind die Führungsmittel derart ausgebildet, dass mit diesen ein oder mehrere diskrete Neigungswinkel der Solarmodule vorgegeben werden können.

Insbesondere sind die Führungsmittel derart ausgebildet, dass mit diesen ein oder mehrere diskrete Neigungswinkel der Solarmodule vorgegeben werden können.

Alternativ wird als Führungsmittel applikationsspezifisch ein einzelnes Loch in den Querträger eingearbeitet, dessen Position im Querträger den Neigungswinkel definiert, und dass am Pfosten ein Zapfen vorgesehen ist, welcher in das Loch eingeführt wird.

Bei dieser Ausführungsform wird, angepasst an die jeweilige Applikation, zur Vorgabe des gewünschten Neigungswinkels werkseitig mit einem geneigten Werkzeug am Installationsort der Tragkonstruktion nur ein Loch in einer entsprechenden, dem Neigungswinkel entsprechenden Sollposition eingearbeitet.

Vorteilhaft werden auf dem Querträger nicht direkt die einzelnen Solarmodule montiert. Vielmehr werden auf dem Querträger Längsträger gelagert, deren Längsachsen zweckmäßig senkrecht zu den Längsachsen der parallel zueinander ausgerichteten Querträger verlaufen. Auf diesen Längsträgern können dann die Solarmodule direkt montiert werden. Alternativ werden auf dem Längsträger Modulträger montiert, auf welchen dann die Solarmodule befestigt werden.

Bei diesen Anordnungen ist besonders vorteilhaft, dass die Längsträger oberhalb der Knotenpunkte, das heißt der Ankopplungspunkte der Streben an den Querträgern liegen. Dadurch ergibt sich ein optimierter Kraftfluss, da der Querträger weitgehend frei von Biegemomenten bleibt und nur auf Zug belastet wird. Weiterhin werden die Streben nur auf Zug oder Druck beansprucht. Dadurch ergibt sind insgesamt eine sehr material- und kostenoptimierte Tragstruktur.

Die Erfindung wird im Folgenden anhand der Zeichnungen erläutert. Es zeigen:
- Figur 1:: Schematische Darstellung eines Ausführungsbeispiels der erfindungsgemäßen Tragkonstruktion für Solarmodule.
- Figur 2:: Erstes Ausführungsbeispiel einer Trägereinheit für die Tragkonstruktion gemäß Figur 1.
- Figur 3:: Zweites Ausführungsbeispiel einer Trägereinheit für die Tragkonstruktion gemäß Figur 1.
- Figur 4:: Drittes Ausführungsbeispiel einer Trägereinheit für die Tragkonstruktion gemäß Figur 1.

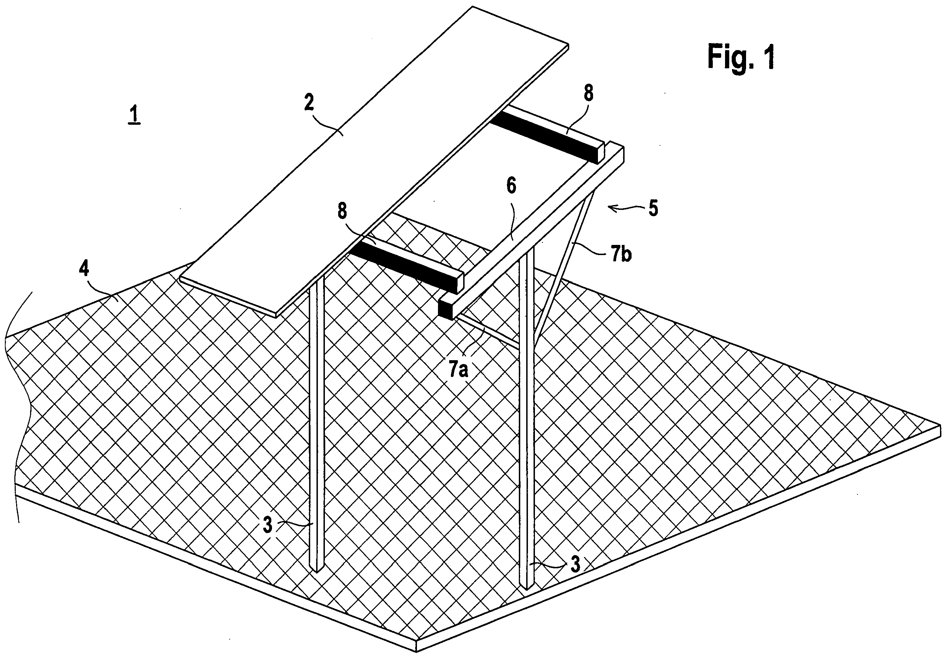

Figur 1 zeigt schematisch einen Ausschnitt eines Ausführungsbeispiels der erfindungsgemäßen Tragkonstruktion 1 für Solarmodule 2. Die Tragkonstruktion 1 mit den Solarmodulen 2 bildet eine Freilandanlage. Die Tragkonstruktion 1 umfasst eine längs einer Geraden angeordnete Reihe von Pfosten 3, die mit in vertikaler Richtung verlaufenden Längsachsen in einem Untergrund 4 verankert sind. Vorteilhaft sind die einzelnen Pfosten 3 äquidistant angeordnet. Die einzelnen Pfosten 3 sind identisch ausgebildet.

An jedem Pfosten 3 ist eine Trägereinheit 5 schwenkbar und damit neigungsverstellbar gelagert. Die jeweils identisch ausgebildeten Trägereinheiten 5 umfassen jeweils einen Querträger 6 und zwei an diesem befestigte Streben 7a, 7b. Bei der Montage der Tragkonstruktion 1 werden die Querträger 6 in ihrer Neigung so verstellt, dass alle Querträger 6 in einer vorgegebenen Sollneigung orientiert sind. Auf die so ausgerichteten Querträger 6 werden Längsträger 8 aufgebracht, deren Längsachsen senkrecht zu den Längsachsen der Querträger 6 verlaufen. Im vorliegenden Fall sind auf den Querträger 6 zwei parallel laufende Längsträger 8 vorgesehen. Auf diesen Längsträgern 8 sind die Solarmodule 2 im vorliegenden Fall direkt befestigt. Dabei liegt jeweils ein Solarmodul 2 auf beiden Längsträgern 8 auf. Generell könnten auch mehrere Längsträger 8 vorgesehen sein, so dass mehrere Solarmodule 2 in Richtung der Längsachsen der Querträger 6 hintereinander angeordnet an den Längsträgern 8 befestigt sind. Weiterhin ist es auch möglich, auf den Längsträger 8 Modulträger zu befestigen, auf welchen dann die Solarmodule 2 befestigt werden.

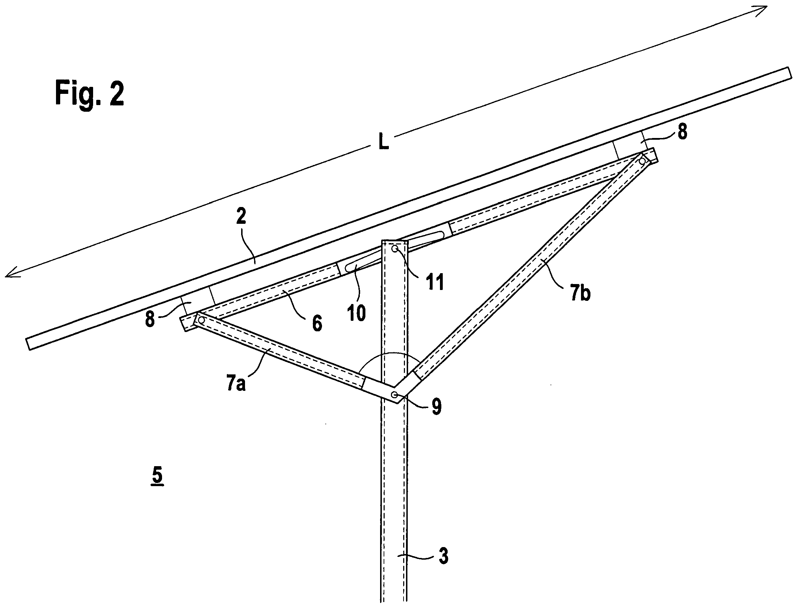

Figur 2 zeigt eine erste Ausführungsform einer Trägereinheit 5 für eine Tragkonstruktion 1 gemäß Figur 1. Wie aus Figur 2 ersichtlich, sind im Bereich der längsseitigen Enden des Querträgers 6 die Längsträger 8 montiert, auf welchen das Solarmodul 2 befestigt ist.

Wie aus Figur 2 ersichtlich steht der untere Teil des Solarmoduls 2 über den unteren Längsträger 8 hervor, während der obere Teil des Solarmoduls 2 über den oberen Längsträger 8 hervorsteht. Eine besonders günstige Anordnung ist dadurch gegeben, dass die Länge des zentralen Teils des Solarmoduls 2 etwa der Hälfte der Gesamtlänge L des Solarmoduls entspricht, während die Längen der über die Längsträger 8 nach oben beziehungsweise nach unten hervorstehenden Teile des Solarmoduls 2 jeweils einem Viertel der Gesamtlänge L des Solarmoduls 2 entsprechen.

Die Trägereinheit 5 bildet eine Dreieckkonstruktion, wobei die Streben 7a, 7b jeweils mit einem längsseitigen Ende an einem längsseitigen Ende des Querträgers 6 befestigt sind und in einem stumpfen Winkel aufeinander zu laufen. Im vorliegenden Fall sind die Streben 7a, 7b fest mit dem Querträger 6 durch geeignete Befestigungsmittel verbunden, das heißt die Streben 7a, 7b bilden mit dem Querträger 6 eine starre, formstabile Konstruktion. Prinzipiell könnten die Streben 7a, 7 auch gelenkig an den Querträgern 6 angebunden sein. Dabei ist im vorliegenden Fall die erste Strebe 7a kürzer als die zweite Strebe 7b, wodurch die Trägereinheit 5 bereits an einen Sollneigungswinkelbereich des Querträgers 6 angepasst sind.

Die dem Querträger 6 abgewandten freien Enden der Streben 7a, 7b sind miteinander fest verbunden und mittels einer Schwenklagerung an dem Pfosten 3 schwenkbar gelagert. Die Schwenklagerung ist im vorliegenden Fall von einem im Pfosten 3 verankerten Bolzen 9 oder dergleichen gebildet. Damit ist die Trägereinheit 5 bezüglich einer von der Längsachse des Bolzens 9 gebildete, feststehende Drehachse am Pfosten 3 schwenkbar gelagert.

Eine weitere Verbindung zwischen der Trägereinheit 5 und dem Pfosten 3 wird durch Führungsmittel am Querträger 6 und am Pfosten 3 erhalten. Diese Führungsmittel umfassen ein Langloch 10 in dem Querträger 6 und einen Zapfen 11 oder dergleichen am Pfosten 3, der im Langloch 10 des Querträgers 6 geführt ist.

Die Breite des Langlochs 10 und der Durchmesser des einen kreisförmigen Querschnitts aufweisenden Zapfens 11 sind so aufeinander abgestimmt, dass der Zapfen 11 mit geringem Spiel in dem Langloch 10 geführt ist. Das Langloch 10 verläuft nicht längs einer Geraden, sondern längs einer gekrümmten Bahn. Die Krümmung der Bahn ist an die Bahnkurve des Querträgers 6 bei Schwenken der Trägereinheit 5 bezüglich der Drehachse der Schwenklangerung so angepasst, so dass der Zapfen 11 während der Schwenklagerung zentral in dem Langloch 10 geführt ist und nicht gegen dessen seitliche Ränder stößt.

Zur Neigungsverstellung wird die gesamte Trägereinheit 5 bezüglich der Schwenkachse der Schwenklagerung geschwenkt, so dass der Querträger 6 relativ zum Pfosten 3 verschoben und dadurch der Zapfen 11 im Langloch 10 geführt wird. Die Größe des Bereichs der Neigungsverstellung ist durch die Größe des Langlochs 10 bestimmt. Sobald die Neigungsverstellung durchgeführt ist, wird diese Einstellung fixiert, wobei hierzu im Bereich der Schwenklagerung und oder im Bereich der Führungsmittel hierfür geeignete Befestigungsmittel vorgesehen sind.

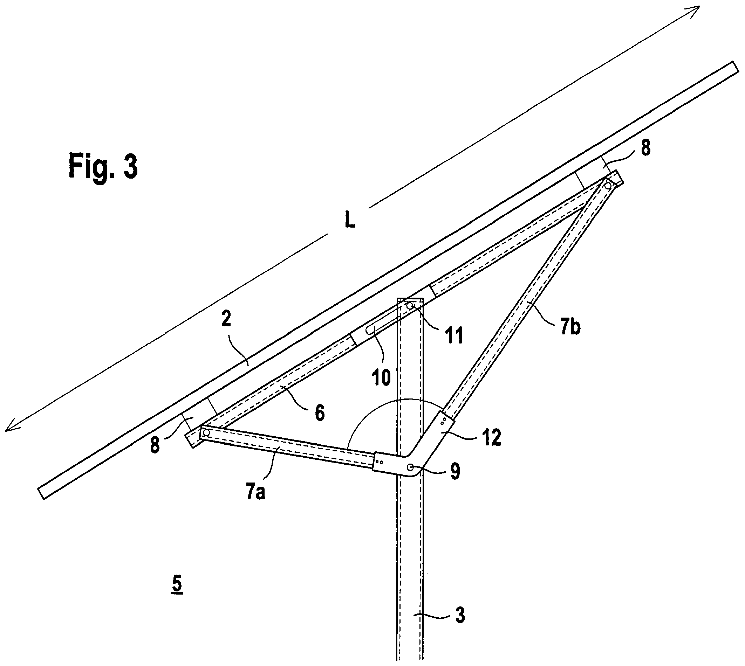

Figur 3 zeigt eine Variante der Ausführungsform gemäß Figur 2. Die Ausführungsform der Figur 3 unterscheidet sich von dem Ausführungsbeispiel von Figur 2 nur hinsichtlich der Ausbildungen der Führungsmittel und der Schwenklagerung. Im vorliegen Fall laufen die dem Querträger 6 abgewandten Enden der Streben 7a, 7b in einer Wippe 12 zusammen. Diese Wippe 12 kann am Bolzen 9 nicht nur geschwenkt werden sondern zudem längs einer Bahnkurve während der Schwenkbewegung verschoben werden. Mit dieser Verschiebebewegung wird erreicht, dass sich bei Schwenken der Trägereinheit 5 der Querträger 6 nur in Richtung seiner Längsachse bewegt, so dass in diesem Fall das Langloch 10 des Querträgers 6, in welchem der Zapfen 11 geführt ist, längs einer Geraden verlaufen kann.

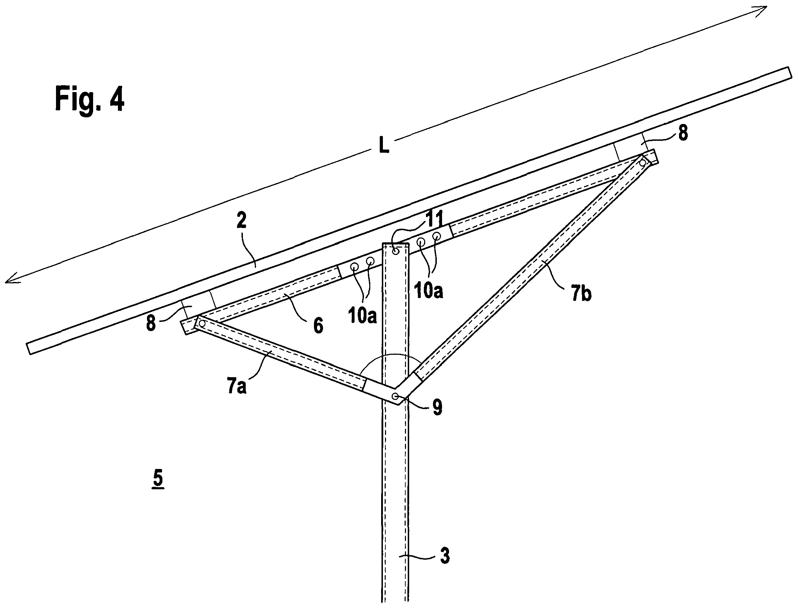

Figur 4 zeigt eine Variante der Ausführungsform der Trägereinheit 5 gemäß Figur 2. Die Anordnung gemäß Figur 4 unterscheidet sich von der Ausführungsform gemäß Figur 2 nur dadurch, dass anstelle des Langlochs 10 eine diskrete Folge einzelner Löcher 10a vorgesehen ist. Die Löcher 10a weisen alle eine identische Größe derart auf, dass der Zapfen 11 am Pfosten spielarm in den Löchern 10a geführt werden kann. Mit den Löchern 10a wird eine diskrete Neigungswinkeleinstellung der Solarmodule 2 ermöglicht. Zur Vorgabe eines Neigungswinkels wird der Zapfen 11 in eines der Löcher eingeführt.

Im vorliegenden Fall weist der Querträger fünf Löcher 10a auf. Generell ist auch eine andere Anzahl von Löchern 10a möglich. Im Grenzfall kann sogar nur ein Loch vorgesehen sein, das zur Vorgabe des Neigungswinkels applikationsspezifisch in den Querträger eingearbeitet wird.

### Bezugszeichenliste

- (1): Tragkonstruktion
- (2): Solarmodul
- (3): Pfosten
- (4): Untergrund
- (5): Trägereinheit
- (6): Querträger
- (7a): Strebe
- (7b): Strebe
- (8): Längsträger
- (9): Bolzen
- (10): Langloch
- (10a): Löcher
- (11): Zapfen
- (12): Wippe

## Patentansprüche

1. Tragkonstruktion (1) für Solarmodule (2), mit einer Anordnung von auf einem Untergrund (4) gelagerten Pfosten (3), wobei an jedem Pfosten (3) eine Trägereinheit (5) schwenkbar gelagert ist, welche (5) zwei einen Querträger (6) tragende Streben (7a, 7b) aufweist, deren dem Querträger (6) abgewandte Enden in einer Schwenklagerung gelagert sind, wobei der Querträger (6) mittels Führungsmitteln verschiebbar am Pfosten (3) gelagert ist, und an dem Querträger (6) Aufnahmemittel zur Lagerung von Solarmodulen (2) vorgesehen sind und durch Einstellung und Fixierung einer Schwenkposition der Trägereinheit (5) die Neigung der Solarmodule (2) vorgegeben ist, **dadurch gekennzeichnet, dass** die Führungsmittel derart ausgebildet sind, dass mit diesem kontinuierlich variierende Neigungswinkel der Solarmodule vorgegeben werden können, wobei als Führungsmittel in dem Querträger (6) ein entlang einer gekrümmten Bahn verlaufendes Langloch (10) und am Pfosten (3) ein im Langloch (10) geführter Zapfen (11) vorgesehen sind, und die Schwenklagerung so ausgebildet ist, dass dort die Trägereinheit (5) um einen festen Drehpunkt drehbar ist, oder die Schwenklagerung so ausgebildet ist, dass die dort zusammenlaufenden Enden der Streben (7a, 7b) bei einem Schwenken der Trägereinheit (5) längs einer Bahn bewegt werden und das Langloch (10) des Querträgers (6) längs einer Geraden verläuft, oder dass die Führungsmittel derart ausgebildet sind, dass mit diesen ein oder mehrere diskrete Neigungswinkel der Solarmodule (2) vorgegeben werden können, wobei als Führungsmittel in dem Querträger (6) eine Folge von diskreten Löchern vorgegeben ist, und am Pfosten (3) ein Zapfen (12) vorgesehen ist, welcher zur Vorgabe eines Neigungswinkels wahlweise in eines der Löcher eingeführt wird oder als Führungsmittel applikationsspezifisch ein einzelnes Loch in den Querträger (6) eingearbeitet wird, dessen Position im Querträger den Neigungswinkel definiert, und am Pfosten (3) ein Zapfen (12) vorgesehen ist, welcher in das Loch eingeführt wird.

2. Tragkonstruktion nach Anspruch 1, **dadurch gekennzeichnet, dass** jeweils ein längsseitiges Ende einer Stütze mit einem längsseitigen Ende eine Querträgers (6) verbunden ist.

3. Tragkonstruktion nach einem der Ansprüche 1 oder 2, **dadurch gekennzeichnet, dass** die Stützen in einem stumpfen Winkel auf die Schwenklagerung zulaufen.

4. Tragkonstruktion nach einem der Ansprüche 1 bis 3, **dadurch gekennzeichnet, dass** auf dem Querträger (6) Längsträger (8) gelagert sind.

5. Tragkonstruktion nach Anspruch 4, **dadurch gekennzeichnet, dass** auf den Längsträgern (8) Solarmodule (2) gelagert sind.

6. Tragkonstruktion nach Anspruch 5, **dadurch gekennzeichnet, dass** auf dem Längsträger (8) Modulträger gelagert sind, auf welchen Solarmodule (2) gelagert werden.

## Claims

1. Support construction (1) for solar modules (2), with an arrangement of posts (3) mounted on a base (4), wherein a support unit (5) is pivotably mounted on each post (3), which support unit (5) comprises two struts (7a, 7b), which carry a cross member (6) and the ends of which remote from the cross member (6) are mounted in a pivot bearing, wherein the cross member (6) is displaceably mounted on the post (3) by way of guide means, and mounting means for mounting solar modules (2) are provided at the cross member (6) and the inclination of the solar modules (2) is predetermined by setting and fixing a pivot position of the support unit (5), **characterised in that** the guide means are so constructed that continuously varying angles of inclination of the solar modules can be predetermined by the guide means, wherein a slot (10) extending along a curved path is provided as guide means in the cross member (6) and pin (11) guided in the slot (10) is provided as guide means at the post (3), and the pivot bearing is so constructed that the support unit (5) is rotatable thereat about a fixed fulcrum or the pivot bearing is so constructed that the ends, which run together thereat, of the struts (7a, 7b) are moved along a path when the support unit (5) is pivoted and the slot (10) of the cross member (6) extends along a straight line or that the guide means are so constructed that one or more discrete angles of inclination of the solar modules (10) can be predetermined by the guide means, wherein a sequence of discrete holes is predetermined as guide means in the cross member (6) and a pin (12) is provided as guide means at the post (3), which pin for predetermining an angle of inclination is selectively introduced into one of the holes, or a single hole is formed in the cross member (6) application-specifically as guide means, the position of the hole in the cross member defining the angle of inclination, and a pin (12), which is introduced into the hole, is provided at the post (3).

2. Support construction according to claim 1, **characterised in that** each longitudinal-side end of a support is connected with a respective longitudinal-side end of a cross member (6).

3. Support construction according to one of claims 1 or 2, **characterised in that** the supports run towards one another at an obtuse angle to the pivot bearing.

4. Support construction according to any one of claims 1 to 3, **characterised in that** longitudinal girders (8) are mounted on the cross member (6).

5. Support construction according to claim 4, **characterised in that** solar modules (2) are mounted on the longitudinal girders (8).

6. Support construction according to claim 5, **characterised in that** module supports on which solar modules (2) are mounted are mounted on the longitudinal girder (8).

## Revendications

1. Construction porteuse (1) pour modules solaires (2), comprenant un agencement de poteaux (3) montés sur un sol (4), une unité de support (5) étant montée de façon pivotante sur chaque poteau (3), laquelle unité de support (5) présente deux jambes de force (7a, 7b) qui portent une poutre transversale (6) et dont les extrémités éloignées de la poutre transversale (6) sont montées dans un palier de pivotement, la poutre transversale (6) étant montée coulissante sur le poteau (3) à l'aide de moyens de guidage et des moyens de réception destinés à porter les modules solaires (2) étant prévus sur la poutre transversale (6) et l'inclinaison des modules solaires (2) étant définie par le réglage et la fixation d'une position de pivotement de l'unité de support (5), **caractérisée en ce que** les moyens de guidage sont conçus de telle sorte qu'ils permettent de définir des angles d'inclinaison des modules solaires variant de manière continue, un trou oblong (10) s'étendant le long d'une trajectoire courbe étant prévu comme moyen de guidage dans la poutre transversale (6) et un tenon (11) guidé dans le trou oblong (10) prévu comme moyen de guidage sur le poteau (3), et le palier de pivotement étant conçu de telle sorte que l'unité de support (5) puisse y tourner autour d'un pivot fixe ou le palier de pivotement étant conçu de telle sorte que les extrémités des jambes de force (7a, 7b) qui y convergent sont déplacées le long d'une trajectoire lors d'un pivotement de l'unité de support (5) et le trou oblong (10) de la poutre transversale (6) s'étend le long d'une droite, ou que les moyens de guidage sont conçus de telle sorte qu'ils permettent de définir un ou plusieurs angles d'inclinaison discrets des modules solaires (2), une suite de trous discrets étant définie comme moyen de guidage dans la poutre transversale (6) et un tenon (12) étant prévu sur le poteau (3), lequel peut être introduit au choix dans un des trous pour définir un angle d'inclinaison, ou qu'un seul trou est ménagé de manière spécifique à l'application dans la poutre transversale (6) en tant que moyen de guidage, dont la position dans la poutre transversale définit l'angle d'inclinaison, et un tenon (12) est prévu sur le poteau (3), lequel peut être introduit dans le trou.

2. Construction porteuse selon la revendication 1, **caractérisée en ce que** chaque fois une extrémité longitudinale d'un jambage est reliée à une extrémité longitudinale d'une poutre transversale (6).

3. Construction porteuse selon l'une des revendications 1 ou 2, **caractérisée en ce que** les jambages convergent sur le palier de pivotement à angle obtus.

4. Construction porteuse selon l'une des revendications 1 à 3, **caractérisée en ce que** des poutres longitudinales (8) sont montées sur la poutre transversale (6).

5. Construction porteuse selon la revendication 4, **caractérisée en ce que** des modules solaires (2) sont montés sur les poutres longitudinales (8).

6. Construction porteuse selon la revendication 5, **caractérisée en ce que** sur la poutre longitudinale (8) sont montés des supports de module sur lesquels sont montés des modules solaires (2).
